# EUROPÄISCHE PATENTSCHRIFT

(11) **EP 3 003 830 B1**
(45) Veröffentlichungstag und Bekanntmachung des Hinweises auf die Patenterteilung: **27.02.2019**
(21) Anmeldenummer: 14722200.4
(22) Anmeldetag: 07.05.2014
(51) Int. Cl.: B62D 21/15, B62D 29/04, F16F 7/12

(54) **KAROSSERIESTRUKTURTRÄGER FÜR EIN KRAFTFAHRZEUG**
BODY STRUCTURAL SUPPORT FOR A MOTOR VEHICLE
SUPPORT DE STRUCTURE DE CARROSSERIE D'UN VÉHICULE AUTOMOBILE

(30) Priorität: 28.05.2013 DE 102013209971
(43) Veröffentlichungstag der Anmeldung: 13.04.2016
(73) Patentinhaber: Bayerische Motoren Werke Aktiengesellschaft, 80809 München (DE)
(72) Erfinder: LUKASZEWICZ, Dirk, 86150 Augsburg (DE); BÖGLE, Christian, 81479 München (DE)
(86) Internationale Anmeldenummer: PCT/EP2014/059301
(87) Internationale Veröffentlichungsnummer: WO 2014/191174

(56) Entgegenhaltungen:
- EP-A1- 1 316 409
- WO-A1-01/28845
- FR-A1- 2 977 648
- JP-A- H06 264 949
- JP-A- 2009 126 182

## Beschreibung

Die vorliegende Erfindung bezieht sich auf einen Karosseriestrukturträger für ein Kraftfahrzeug, der aus faserverstärktem Kunststoff ausgebildet ist. Insbesondere ist der Karosseriestrukturträger als ein in einem Kollisionsfall des Kraftfahrzeugs energieabsorbierender Träger ausgebildet. Ein derartiger Karosseriestrukturträger ist Bestandteil einer sogenannten "Crash"-Struktur einer Karosserie des Kraftfahrzeugs.

Es ist bekannt Karosseriestrukturträger für eine Karosserie eines Kraftfahrzeugs derart auszulegen, dass sie in einem Kollisionsfall des Kraftfahrzeugs Kollisionsenergie absorbierend versagen. Karosseriestrukturträger aus metallischen Werkstoffen sind dabei derart ausgelegt, dass sie sich bei Überschreiten eines vorgegebenen Kraftniveaus über eine dafür vorgesehene Strecke geeignet verformen. Bei Karosseriestrukturträgern aus faserverstärktem Kunststoff spielt jedoch ein Abbau von Kollisionsenergie durch Verformung keine Rolle. Ein hinreichender Abbau von Kollisionsenergie bei einem Karosseriestrukturträger aus einem faserverstärkten Kunststoff ist ein sprödes Versagen. Ein derartiges Versagen wird beispielsweise "Crushing" genannt. Beim Versagensmechanismus "Crushing" erfolgt eine mehr oder weniger vollständige Desintegration (Pulverisierung bzw. Fragmentierung oder auch Zersplitterung genannt) des Karosseriestrukturträgers vorrangig im Sprödbruch. Eine weitere Form des "Crushings" ist eine definierte Umlenkung des Materials um 180° direkt an einer Aufprallfläche, wobei diese Umlenkung auch Aufschälen oder Schälen genannt wird. Beim Crushing kommt zum Abbau der kinetischen Kollisionsenergie ein Faserbruchmechanismus in Verbindung mit Reibung zur Wirkung. Die beiden genannten Versagensmechanismen funktionieren effektiv bei einem frontalen Aufprall, bei welchem die Kraft auf den Karosseriestrukturträger senkrecht zu einem Trägerquerschnitt wirkt. Zwischen den vorstehend genannten Versagensarten des "Crushing" gibt es alle möglichen Zwischenformen eines Versagens, die sich grundsätzlich durch einen mehr oder weniger kleinteiligen Faserbruch unterscheiden. Je kleinteiliger das Versagen, umso höher ist die Kollisionsenergieabsorptionsfähigkeit beim Versagen bzw. desto höher ist die Last/Kraft, bei der das Versagen erfolgt.
Dokument JP H06 264949 A offenbart einen Karosseriestrukturträger gemäß dem Oberbegriff des unabhängigen Patentanspruchs 1.

Es ist die Aufgabe der vorliegenden Erfindung, einen Karosseriestrukturträger für ein Kraftfahrzeug zu schaffen, der unter Berücksichtigung eines Leichtbaus ein Versagen bei unterschiedlichen Kraftniveaus bei einer Kollision des Kraftfahrzeugs ermöglicht.

Diese Aufgabe wird durch einen Karosseriestrukturträger für ein Kraftfahrzeug gelöst, der die Merkmale von Patentanspruch 1 aufweist. Bevorzugte Weiterbildungen der Erfindung sind in den abhängigen Patentansprüchen aufgeführt.

Ein Karosseriestrukturträger für ein Kraftfahrzeug gemäß der vorliegenden Erfindung ist aus einem faserverstärkten Kunststoff ausgebildet. Der Karosseriestrukturträger hat ein Hohlprofil, das Versagensabschnitte aufweist. Die Versagensabschnitte sind derart ausgebildet, dass sie im Falle einer Last durch eine Kollision des Kraftfahrzeugs mit einem Kollisionsgegener, wie beispielsweise einem anderen Fahrzeug oder einem festem Hindernis, zum Abbau von Kollisionsenergie, insbesondere spröde, versagen. Die Versagensabschnitte haben unterschiedlich große Durchmesser. Je größer der Durchmesser eines Versagensabschnitts ist, desto geringer ist eine Wandstärke des jeweiligen Abschnitts des Karosseriestrukturträgers ausgebildet. Mit faserverstärktem Kunststoff sind im vorliegenden Fall alle Arten von Faserverbundwerkstoffen gemeint.

Die Erfinder haben gefunden, dass eine Wandstärke eines faserverstärkten Kunststoffs beim Versagen eine wesentliche Rolle spielt. Insbesondere erfolgt ein Versagen einer Wand des Karosseriestrukturträgers mit verhältnismäßig großer Wandstärke bei einem verhältnismäßig großen Kraftniveau. Dahingegen versagt eine Wand des Karosseriestrukturträgers mit einer verhältnismäßig geringen Wandstärke bei einem geringeren Kraftniveau. Damit kann der Karosseriestrukturträger an den verschiedenen Versagensabschnitten gewollt bei unterschiedlichen Kraftniveaus versagen. Dementsprechend kann in einem bestimmten Versagensabschnitt der Karosseriestrukturträger bei einer großen Kraft versagen, wodurch eine große Kollisionsenergie absorbiert wird, und kann der Karosserieträger danach oder davor in einem anderen Versagensabschnitt bei einer niedrigeren Kraft versagen, so dass im Bereich des Versagens des anderen Versagensabschnitts eine geringere Kollisionsenergie absorbiert wird.

Der Karosseriestrukturträger kann lediglich zwei unterschiedliche Versagensabschnitte aufweisen. Er kann jedoch auch mehrere oder eine Vielzahl von Versagensabschnitten aufweisen.

Es ist auch ein Versagensabschnitt möglich, bei dem ein Durchmesser in Längsrichtung des Karosseriestrukturträgers kontinuierlich vergrößert oder verringert ist und entsprechend eine Wandstärkte kontinuierlich verringert oder vergrößert ist.

Hierdurch ist es möglich, bei einer Kollision des Kraftfahrzeugs und einem Versagen des Versagensabschnitts eine kontinuierliche Erhöhung oder Verringerung eines Versagenskraftniveaus zu ermöglichen und dadurch eine kontinuierliche Erhöhung einer Energieabsorption bzw. eine kontinuierliche Verringerung einer Energieabsorption im Verlauf der Kollision zu ermöglichen.

Erfindungsgemäß ist eine Fasermenge in Längsrichtung des Karosseriestrukturträgers in den Versagensabschnitten im Wesentlichen konstant.

Hierdurch ist in den Versagensabschnitten mit geringer Wandstärke und größerem Durchmesser eine geringere Fasermenge je Umfangslängeneinheit vorhanden als in den Versagensabschnitten mit kleinerem Durchmesser und größerer Wandstärke.

Dies führt insbesondere dazu, dass der Versagensabschnitt mit dem großen Durchmesser und der geringen Wandstärke bei einem niedrigeren Kraftniveau versagt als der Versagensabschnitt mit dem kleinen Durchmesser und der großen Wandstärke.

Gemäß einer bevorzugten Weiterbildung des Karosseriestrukturträgers ist jener mit Endlosfasern in einem kontinuierlichen Herstellungsverfahren hergestellt. Das kontinuierliche Herstellungsverfahren kann ein Flechtprozess sein. Alternativ kann das kontinuierliche Herstellungsverfahren ein Pultrusionsprozess sein. Als weitere Alternative kann das kontinuierliche Herstellungsverfahren ein Wickelprozess sein. Es ist auch eine Kombination dieser Herstellungsverfahren möglich.

Bei dem kontinuierlichen Herstellungsverfahren mit Endlosfasern ist es insbesondere einfach möglich, in Längsrichtung des Karosserieträgers in den Versagensabschnitten eine Fasermenge im Wesentlichen konstant auszuführen.

Bevorzugt ist der Karosseriestrukturträger derart ausgebildet, dass ein insbesondere sprödes Versagen der Versagensabschnitte bei der Kollision derart in Übereinstimmung mit einem Änderungsverlauf einer bei der Kollision wirksamen Masse des Kraftfahrzeugs verläuft, dass die unterschiedlichen Durchmesser entsprechend der Änderung einer wirksamen Masse des Kraftfahrzeugs bei der Kollision gewählt sind. Mit anderen Worten ist der Karosseriestrukturträger derart ausgebildet und angeordnet, dass beispielsweise bei einer hohen wirksamen Masse der Versagensabschnitt mit dem geringen Durchmesser und der großen Wandstärke, d.h. bei einem hohen Kraftniveau, versagt. Sobald die bei der Kollision des Kraftfahrzeugs wirksame Masse des Kraftfahrzeugs verringert ist, versagt der Versagensabschnitt mit großem Durchmesser und geringer Wandstärke bei einem geringeren Kraftniveau.

Ein großes Kraftniveau bedeutet bei gleicher Kollisionsmasse des Kraftfahrzeugs eine verhältnismäßig große Verzögerung/Beschleunigung, die auf einen Fahrzeuginsassen bei aktiven Rückhaltesystem bzw. auf die Fahrgastzelle wirkt. Ein kleines Kraftniveau bedeutet bei gleicher Masse, dass eine geringere Verzögerung/Beschleunigung auf den Fahrzeuginsassen bzw. auf die Fahrgastzelle wirkt. Unter der Berücksichtigung, dass sich im Laufe einer Kollision des Kraftfahrzeugs eine wirksame Masse des Kraftfahrzeugs verändert, hat dies eine Auswirkung auf eine Verzögerung/Beschleunigung, so dass bei einer Verringerung der Masse sogar eine größere Verzögerung/Beschleunigung bei gleichem Kraftniveau möglich ist. Insofern ist es gemäß der vorliegenden Erfindung besonders einfach, einen Kraftverlauf und damit eine auf einen Insassen wirkende Verzögerung/Beschleunigung zu steuern und insbesondere zu verhindern, dass eine Verzögerung/Beschleunigung einen bestimmten Schwellwert überschreitet. Die vorliegende Erfindung ermöglicht dies insbesondere unter Berücksichtigung des Aspektes einen möglichst leichten Karosseriestrukturträger vorzusehen, der trotzdem hinreichende Kollisionsenergie absorbierende Eigenschaften hat und es insbesondere verhindert, dass ein Schwellwert für eine Verzögerung/Beschleunigung, die auf den Fahrzeuginsassen wirkt, nicht überschritten wird.

Bevorzugt ist der Karosseriestrukturträger derart gestaltet, dass ein Versagen des Versagensabschnitts mit einem kleinen Durchmesser erfolgt, wenn die bei der Kollision wirksame Masse des Kraftfahrzeugs verhältnismäßig groß ist, und ein Versagen des Versagensabschnitts mit einem großen Durchmesser erfolgt, wenn die bei der Kollision wirksame Masse des Kraftfahrzeugs verhältnismäßig klein ist.

Bevorzugt ist der Karosseriestrukturträger an die Karosserie des Kraftfahrzeugs, an der eine Baugruppe mit großer Masse befestigt ist, derart angepasst, dass der Versagensabschnitt mit kleinem Durchmesser derart angeordnet ist, dass er versagt, während die Masse der Baugruppe eine bei der Kollision wirksame Masse ist. Ferner ist der Versagensabschnitt mit großem Durchmesser derart angeordnet, dass er versagt, während die Masse der Baugruppe keine bei der Kollision wirksame Masse mehr ist. Die Masse der Baugruppe ist insbesondere dann keine bei der Kollision wirksame Masse mehr, wenn die Masse unmittelbar oder mittelbar an einem Kollisionsgegner anliegt und damit kein zwischenliegendes Verformungspotential bzw. Energieabsorptionspotenzial mehr vorhanden ist.

Die Baugruppe kann eine Antriebseinheit und/oder ein Energiespeicher sein. Die Antriebseinheit kann beispielsweise ein Verbrennungsmotor, ein Elektromotor, eine Brennstoffzelle und/oder ein Getriebe sein. Der Energiespeicher kann zum Beispiel eine Speicherzellenbaueinheit zur Speicherung von elektrischer Energie, beispielsweise eine Traktionsbatterie und/oder ein Kondensator, und/oder ein Kraftstoffbehälter für beispielsweise Kraftstoffe wie Kohlenwasserstoffe oder Wasserstoff sein.

Gemäß der vorliegenden Erfindung sind bei dem Karosseriestrukturträger die Versagensabschnitte aneinander angrenzend bzw. ineinander übergehend ausgebildet.

Dieses ist insbesondere dahingehend vorteilhaft, dass nach einem vollständigen Versagen eines ersten Versagensabschnitts das Versagen des daran angrenzenden Versagensabschnitts unmittelbar induziert wird und in dem angrenzenden Versagensabschnitt weiter fortschreitet.

Gemäß einer Weiterbildung der vorliegenden Erfindung kann das Hohlprofil alle möglichen geeigneten Querschnitte aufweisen. Das Hohlprofil kann beispielsweise einen runden Querschnitt oder einen im Wesentlichen mehreckigen Querschnitt aufweisen. Bevorzugt werden bei Karosseriestrukturträgern, die als Längsträger verwendet werden, wie beispielsweise einem vorderen Längsträger oder einem hinteren Längsträger, rechteckige Hohlprofile angewendet. Das Hohlprofil kann grundsätzlich auch über eine Länge des Karosseriestrukturträgers unterschiedliche Querschnittsformen aufweisen.

Bevorzugt ist bei dem Karosseriestrukturträger gemäß der vorliegenden Erfindung ein Verhältnis von der Wandstärke zu einem Umfang des Bauteils in den Versagensabschnitten im Wesentlichen konstant ausgebildet.

Durch die unterschiedliche Ausbildung der Versagensabschnitte ist in dem Karosseriestrukturträger zumindest ein Hochkollisionsabsorptionsabschnitt sowie ein Niedrigkollisionsenergieabsorptionsabschnitt ausgebildet.

Vorstehend beschriebene weiterbildende Merkmale der vorliegenden Erfindung können soweit möglich beliebig miteinander kombiniert werden.

Nachstehend erfolgt eine Kurzbeschreibung der Figur.

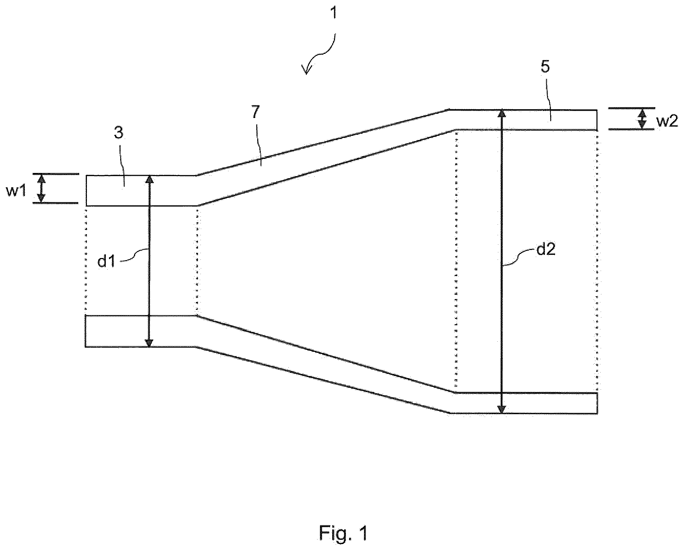

- Fig. 1: zeigt einen schematischen Längsschnitt durch einen Karosseriestrukturträger gemäß einem Ausführungsbeispiel der vorliegenden Erfindung.

Im Folgenden ist ein Ausführungsbeispiel der vorliegenden Erfindung unter Bezugnahme auf Figur 1 beschrieben.

Der Karosseriestrukturträger 1 gemäß dem Ausführungsbeispiel der vorliegenden Erfindung weist insgesamt drei Versagensabschnitte auf. Ein erster Versagensabschnitt 3 hat einen verhältnismäßig kleinen Durchmesser d1 und eine verhältnismäßig große Wandstärke w1. Ein zweiter Versagensabschnitt 5 hat einen verhältnismäßig großen Durchmesser d2 und eine verhältnismäßig kleine Wandstärke w2. Ferner sind der erste Versagensabschnitt 3 und der zweite Versagensabschnitt 5 mit einem dritten Versagensabschnitt 7 verbunden, der einen in Längsrichtung kontinuierlich größer werdenden Durchmesser hat. Insbesondere hat der dritte Versagensabschnitt 7 an seinem Ende, das an den ersten Versagensabschnitt 3 angrenzt, einen Durchmesser d1 und hat an seinem rechten Ende, das an den zweiten Versagensabschnitt 5 angrenzt, einen Durchmesser d2. Entsprechend dem in Längsrichtung des Karosseriestrukturträgers 1 kontinuierlich geänderten Durchmesser des dritten Versagensabschnitts 7 hat der dritte Versagensabschnitt 7 eine in Längsrichtung des Karosseriestrukturträgers 1 kontinuierlich sich ändernde Wandstärke, Insbesondere ist die Wandstärke des dritten Versagensabschnitts 7 in dem Bereich, der an den ersten Versagensabschnitt 3 angrenzt, der Wandstärke w1 entsprechend. Ferner ist die Wandstärke an dem Ende des dritten Versagensabschnitts 7, das an den zweiten Versagensabschnitt 5 angrenzt, entsprechend der Wandstärke w2 ausgebildet.

Der Karosseriestrukturträger 1 ist beispielsweise ein Längsträger einer Karosserie eines Kraftfahrzeugs und ist aus einem faserverstärkten Kunststoff, bevorzugt aus einem kohlefaserverstärkten Kunststoff, hergestellt. Alternativ können auch Glasfasern oder Aramidfasern oder andere geeignete Fasern zum Einsatz kommen. Die Fasern sind insbesondere über einen Flechtprozess vorbereitet. Bei dem Flechtprozess kann besonders einfach eine konstante Fasermenge unabhängig vom Durchmesser bzw. der Querschnittsform über eine Länge des Karosseriestrukturträgers 1 abgelegt werden. Ferner können beim Flechtprozess einfach Durchmesseränderungen des Karosseriestrukturträgers über dessen Länge ermöglicht werden. Hierdurch ergibt sich automatisch bei der Herstellung des Karosseriestrukturträgers durch die im Wesentlichen konstante Fasermenge eine geringe Wandstärke in Bereichen mit einem großen Durchmesser und eine größere Wandstärke in Bereichen mit einem kleinen Durchmesser.

Hierdurch können einfach verschiedene Versagensabschnitte, wie der erste Versagensabschnitt 3, der zweite Versagensabschnitt 5 und der dritte Versagensabschnitt 7 bereitgestellt werden, die jeweils bei unterschiedlichen Lastniveaus versagen.

Unter der Annahme, dass bei dem in Figur 1 gezeigten Träger eine Last von links auf den Karosseriestrukturträger 1 wirkt und ein Versagen an dem linken Ende des Karosseriestrukturträgers 1 induziert wird, versagt der Karosseriestrukturträger 1 zu Beginn bei einem verhältnismäßig großen Kraftniveau bis das Versagen des ersten Versagensabschnitts 3 den dritten Versagensabschnitt 7 erreicht. Im Bereich des dritten Versagensabschnitts 7 erfolgt nun eine kontinuierliche Verringerung eines Kraftniveaus, da bei konstanter Fasermenge über eine Längsrichtung des Karosseriestrukturträgers 1 die Wandstärke kontinuierlich verringert wird. Erreicht das Versagen des dritten Versagensabschnitts 7 den zweiten Versagensabschnitt 5 versagt dieser ebenso von links nach rechts in Längsrichtung, wobei nunmehr ein konstantes geringeres Kraftniveau erzielt ist.

Der Karosseriestrukturträger 1 kann dabei insbesondere beispielsweise als Längsträger in dem Kraftfahrzeug derart angeordnet sein, so dass bei einem Versagen des ersten Versagensabschnitts 3 noch im Wesentlichen eine gesamte Masse des Kraftfahrzeugs wirkt. Im dritten Versagensabschnitt 7 wird hingegen einer kontinuierlichen Verringerung einer wirksamen Masse des Kraftfahrzeugs Rechnung getragen, so dass das Versagen kontinuierlich bei einem geringeren Kraftniveau stattfindet. Ferner könnte der zweite Versagensabschnitt 5 derart angeordnet sein, so dass beim Versagen dieses Versagensabschnitts nur noch eine geringere Masse des Kraftfahrzeugs wirkt, weil beispielsweise ein Antriebsaggregat, wie ein Verbrennungsmotor oder ein Elektromotor mit großer Masse an einem Kollisionsgegner anliegt und damit keine bei der Kollision wirksame Masse mehr darstellt.

Insgesamt kann gemäß der vorliegenden Erfindung über eine einfache geometrische Gestaltung und einen kontinuierlichen Herstellungsprozess des Karosseriestrukturträgers unter Berücksichtigung eines möglichst geringen Gewichts des Karosseriestrukturträgers ein Versagenskraftniveau angepasst an einen wirksamen Masseverlauf des Kraftfahrzeugs bei der Kollision ausgebildet sein.

## Patentansprüche

1. Karosseriestrukturträger für ein Kraftfahrzeug, der aus faserverstärktem Kunststoff ausgebildet ist und ein Hohlprofil mit Versagensabschnitten (3, 5, 7) aufweist, die derart ausgebildet sind, dass sie im Falle einer Last durch eine Kollision des Kraftfahrzeugs zum Abbau von Kollisionsenergie versagen, wobei die Versagensabschnitte (3, 5, 7) unterschiedliche Durchmesser (d1, d2) aufweisen und wobei je größer der Durchmesser des jeweiligen Versagensabschnittes (3, 5, 7) ist, desto geringer eine Wandstärke (w1, w2) des jeweiligen Abschnitts des Karosseriestrukturträgers (1) ausgebildet ist, **dadurch gekennzeichnet, dass** eine Fasermenge in Längsrichtung des Karosseriestrukturträgers (1) in den Versagensabschnitten (3, 5, 7) im Wesentlichen konstant ist, wobei in den Versagensabschnitten mit geringer Wandstärke und größerem Durchmesser eine geringere Fasermenge je Umfangslängeneinheit vorhanden ist als in den Versagensabschnitten mit kleinerem Durchmesser und größerer Wandstärke.

2. Karosseriestrukturträger nach Patentanspruch 1, wobei der Karosseriestrukturträger (1) mit Endlosfasern in einem kontinuierlichen Herstellungsverfahren, insbesondere durch Flechten und/oder Pultrusion und/oder Wickeln, hergestellt ist.

3. Karosseriestrukturträger nach Patentanspruch 1 oder 2, wobei ein Versagen der Versagensabschnitte (3, 5, 7) bei der Kollision derart in Übereinstimmung mit einem Änderungsverlauf einer bei der Kollision wirksamen Masse des Kraftfahrzeugs verläuft, dass die unterschiedlichen Durchmesser (d1, d2) entsprechend der Änderung einer wirksamen Masse des Kraftfahrzeugs bei der Kollision gewählt sind.

4. Karosseriestrukturträger nach einem der Patentansprüche 1 bis 3, wobei der Karosseriestrukturträger (1) derart gestaltet ist, dass ein Versagen des Versagensabschnitts (3) mit einem kleinen Durchmesser (d1) erfolgt, wenn die bei der Kollision wirksame Masse des Kraftfahrzeugs verhältnismäßig groß ist, und ein Versagen des Versagensabschnitts (5) mit einem großen Durchmesser (d2) erfolgt, wenn die bei der Kollision wirksame Masse des Kraftfahrzeugs verhältnismäßig klein ist.

5. Karosseriestrukturträger nach Patentanspruch 4, wobei an der Karosserie eine Baugruppe mit großer Masse befestigt ist, wobei der Versagensabschnitt (3) mit kleinem Durchmesser (d1) derart angeordnet ist, dass er versagt, während die Masse der Baugruppe eine bei der Kollision wirksame Masse ist, und dass der Versagensabschnitt (5) mit großen Durchmessser (d2) derart angeordnet ist, dass er versagt, wenn die Masse der Baugruppe keine bei der Kollision wirksame Masse mehr ist und insbesondere unmittelbar oder mittelbar an einem Kollisionsgegner anliegt.

6. Karosseriestrukturträger nach Patentanspruch 5, wobei die Baugruppe eine Antriebseinheit, insbesondere ein Verbrennungsmotor, ein Elektromotor, eine Brennstoffzelle und/oder ein Getriebe ist, und/oder ein Energiespeicher, insbesondere eine Speicherzellenbaueinheit zur Speicherung von elektrischer Energie, beispielsweise eine Traktionsbatterie und/oder ein Kondensator, und/oder ein Kraftstoffbehälter, ist.

7. Karosseriestrukturträger nach einem der Patentansprüche 1 bis 6, wobei die Versagensabschnitte (3, 5, 7) des Karosseriestrukturträgers (1) aneinander angrenzend ausgebildet sind.

8. Karosseriestrukturträger nach einem der Patentansprüche 1 bis 7, wobei das Hohlprofil einen im Wesentlichen runden Querschnitt oder einen im Wesentlichen mehreckigen, beispielsweise rechteckigen, Querschnitt aufweist.

9. Karosseriestrukturträger nach einem der Patentansprüche 1 bis 8, wobei ein Verhältnis von der Wandstärke (w1, w2) zu einem Umfang des Bauteils in den Versagensabschnitten (3, 5, 7) im Wesentlichen konstant ausgebildet ist.

10. Kraftfahrzeug mit einer Karosserie, die einen Karosseriestrukturträger nach einem der Patentansprüche 1 bis 9 aufweist.

## Claims

1. A body structural support for a motor vehicle which is formed of fibre-reinforced plastic and has a hollow profile with failure sections (3, 5, 7) which are formed in such a way that they fail in the event of a load due to a collision of the motor vehicle in order to decrease collision energy, wherein the failure sections (3, 5, 7) have different diameters (d1, d2) and wherein the larger the diameter of the respective failure section (3, 5, 7), the thinner a wall thickness (w1, w2) of the respective section of the body structural support (1), **characterized in that** a number of fibres in the longitudinal direction of the body structural support (1) is essentially constant in the failure sections (3, 5, 6), wherein the failure sections with a low wall thickness and a larger diameter have a lower number of fibres per peripheral length unit than the failure sections with a smaller diameter and greater wall thickness.

2. A body structural support according to Claim 1, wherein the body structural support (1) is made with endless fibres in a continuous manufacturing process, in particular by way of braiding and/or pultrusion and/or winding.

3. A body structural support according to Claim 1 or 2, wherein a failure of the failure sections (3, 5, 7) during the collision corresponds with a change development of an effective mass of the motor vehicle during the collision in such a way that the different diameters (d1, d2) are selected according to the change in an effective mass of the motor vehicle during the collision.

4. A body structural support according to one of Claims 1 to 3, wherein the body structural support (1) is formed in such a manner that a failure of the failure section (3) with a small diameter (d1) occurs if the effective mass of the motor vehicle during the collision is relatively large and a failure of the failure section (5) with a large diameter (d2) occurs if the effective mass of the motor vehicle during the collision is relatively small.

5. A body structural support according to Claim 4, wherein an assembly with large mass is fastened to the body, wherein the failure section (3) with small diameter (d1) is arranged such that it fails when the mass of the assembly is an effective mass during the collision, and the failure section (5) with large diameter (d2) is arranged such that it fails when the mass of the assembly is no longer an effective mass during the collision and in particular is in direct or indirect contact with a collision opponent.

6. A body structural support according to Claim 5, wherein the assembly is a drive unit, in particular an internal combustion engine, an electric motor, a fuel cell and/or a transmission, and/or an energy storage device, in particular a storage cell unit for storing electrical energy, for example a traction battery and/or a capacitor, and/or a fuel tank.

7. A body structural support according to one of Claims 1 to 6, wherein the failure sections (3, 5, 7) of the body structural support (1) are formed adjacent to one another.

8. A body structural support according to one of Claims 1 to 7, wherein the hollow profile has an essentially round cross-section or an essentially polygonal, for example rectangular, cross-section.

9. A body structural support according to one of Claims 1 to 8, wherein a ratio of the wall thickness (w1, w2) to a circumference of the component in the failure sections (3, 5, 7) is essentially constant.

10. Motor vehicle with a body having a body structural support according to one of Claims 1 to 9.

## Revendications

1. Support de structure de carrosserie destiné à un véhicule qui est réalisé en un matériau synthétique renforcé par des fibres et comporte un profilé creux ayant des segments de défaillance (3, 5, 7) qui sont réalisés de façon à s'affaisser en présence d'une charge suite à une collision du véhicule, pour réduire l'énergie de collision, les segments de défaillance (3, 5, 7) ayant des diamètres (d1, d2) différents, et plus le diamètre de chaque segment de défaillance (3, 5, 7) est grand, plus est faible l'épaisseur de paroi (w1, w2) de ce segment du support de structure de carrosserie (1),
**caractérisé en ce que**
la quantité de fibres dans la direction longitudinale du support de structure de carrosserie (1) est essentiellement constante dans les segments de défaillance (3, 5, 7), les segments de défaillance ayant une plus faible épaisseur de paroi et un plus grand diamètre, ayant une quantité de fibres par unité de longueur périphérique plus faible que les segments de défaillance ayant un plus petit diamètre et une plus grande épaisseur de paroi.

2. Support de structure de carrosserie conforme à la revendication 1, obtenu avec des fibres continues par un procédé de fabrication continue, en particulier par tissage et/ou pultrusion et/ou enroulement.

3. Support de structure de carrosserie conforme à la revendication 1, dans lequel, lors de la collision un affaissement des segments de défaillance (3, 5, 7) se produit, en concordance avec la variation de la masse active du véhicule lors de la collision du fait que les différents diamètres (d1, d2) sont choisis selon la variation de la masse active du véhicule lors de la collision.

4. Support de structure de carrosserie conforme à l'une des revendications 1 à 3,
conformé de sorte qu'un affaissement du segment de défaillance (3) ayant un petit diamètre (d1) se produise lorsque la masse du véhicule active lors de la collision est relativement grande, et qu'un affaissement du segment de défaillance (5) ayant un grand diamètre (d2) se produise lorsque la masse du véhicule active lors de la collision est relativement faible.

5. Support de structure de carrosserie conforme à la revendication 4, dans lequel, un composant de grande masse est fixé sur la carrosserie, le segment de défaillance (3) ayant un petit diamètre (d1) est monté de sorte qu'il s'affaisse lorsque la masse du composant est une masse active lors de la collision, et le segment de défaillance (5) ayant un grand diamètre (d2) est monté de sorte qu'il s'affaisse lorsque la masse du composant n'est plus une masse active lors de la collision et s'applique en particulier directement ou indirectement sur un participant à la collision.

6. Support de structure de carrosserie conforme à la revendication 5, dans lequel, le composant est une unité d'entraînement, en particulier un moteur à combustion interne, un moteur électrique, une pile à combustible et/ou une boîte de vitesse, et/ou est un accumulateur d'énergie, en particulier une unité de piles à combustible permettant d'accumuler de l'énergie électrique, par exemple une batterie de traction et/ou un condensateur et/ou un réservoir de carburant.

7. Support de structure de carrosserie conforme à l'une des revendications 1 à 6,
dans lequel, les segments de défaillance (3, 5, 7) du support de structure de carrosserie (1) sont adjacents.

8. Support de structure de carrosserie conforme à l'une des revendications 1 à 7,
dans lequel, le profilé creux a une section essentiellement circulaire ou une section essentiellement polygonale, par exemple une section rectangulaire.

9. Support de structure de carrosserie conforme à l'une des revendications 1 à 8,
dans lequel, le rapport entre l'épaisseur de paroi (w1, w2) et le périmètre de l'élément dans les segments de défaillance (3, 5, 7) est essentiellement constant.

10. Véhicule ayant une carrosserie comportant un support de structure de carrosserie conforme à l'une des revendications 1 à 9.
